# EUROPÄISCHE PATENTSCHRIFT

(11) **EP 2 000 699 B1**
(45) Veröffentlichungstag und Bekanntmachung des Hinweises auf die Patenterteilung: **21.05.2014**
(21) Anmeldenummer: 08010042.3
(22) Anmeldetag: 02.06.2008
(51) Int. Cl.: F16F 15/131

(54) **Torsionsschwingungsdämpfer oder Dekoppler mit gewickelten Drahtfedern in einer Antriebsscheibe**
Torque oscillation attenuator or decoupler with coiled wire springs in a drive disc
Amortisseur d'oscillations de torsions ou découpleur doté de fils de fer enroulés dans un disque d'entraînement

(30) Priorität: 04.06.2007 DE 102007026195
(43) Veröffentlichungstag der Anmeldung: 10.12.2008
(73) Patentinhaber: Muhr und Bender KG, 57489 Attendorn (DE)
(72) Erfinder: Schebitz, Michael, Dipl.-Ing., 57349 Attendorn (DE); Zacker, Matthias, Dipl.-Ing., 57439 Attendorn (DE)
(74) Vertreter: Neumann, Ernst Dieter

(56) Entgegenhaltungen:
- EP-A1- 1 760 355
- DE-T2- 60 200 178

## Beschreibung

Die Erfindung betrifft eine Antriebsscheibe, an der eine Nabe und ein Scheibenkranz über ein Federungs- und Dämpfungselement - als Torsionsschwingungsdämpfer oder Dekoppler - zu Zwecken der Drehmomentübertragung miteinander verbunden sind. Der Antrieb kann hierbei vom Scheibenkranz auf die Nabe oder von der Nabe auf den Scheibenkranz erfolgen. Die Nabe kann an eine Antriebswelle angeschraubt sein. Die genannte Antriebswelle kann hierbei zum Beispiel eine Kurbelwelle oder eine Nockenwelle eines Verbrennungsmotors sein, wobei über die Antriebsscheibe Nebenantriebe angetrieben werden können. Aufgrund der periodischen Arbeitsweise von Verbrennungsmotoren oder beispielsweise auch von Kolbenverdichtern entstehen an den Wellenenden dieser Maschinen Ungleichförmigkeiten in der Winkelgeschwindigkeit und im Drehmoment, die durch Schwingungs- und Resonanzerscheinungen der Wellen noch verstärkt werden können. Um diese Ungleichförmigkeiten im Antrieb zu den Nebenantrieben zu dämpfen, sind Antriebsscheiben vohgeschlagen worden mit einer Nabe und einem Scheibenkranz, die drehbar ineinander gelagert sind, mit zumindest zwei gegensinnig gewickelten Drahtfedern, die um die Drehachse gewickelt zwischen Nabe und Scheibenkranz gegeneinander vorgespannt verbaut sind und deren jeweils eines Ende gegenüber der Nabe und deren jeweils anderes Ende gegenüber dem Scheibenkranz im Drehsinn festgelegt ist (EP 1 760 355 A1).

Hierbei ist vorgesehen, daß die Drahtfedern eine lineare Kennlinie aufweise , indem sie im gesamten Arbeitsbereich der Abtriebsscheibe zwischen ihren Anbiridebereichen an der Nabe und am Scheibenkranz frei verformbar bleiben.

Der Arbeitsbereich der Antriebsscheibe ist hierbei der Bereich einer gegenseitigen Verdrehung von Nabe und Scheibenkranz gegen die Rückstellkräfte der Drahtfedern zum Zweck der Stoß- und Schwingungsdämpfung

Zur Begrenzung des Arbeitsbereiches können Drehanschläge zwischen Nabe und Scheibenkranz vorgesehen sein.

Im Züge der Bemühungen zur Senkung der CO₂ -Emissionen von Fahrzeugen werden zunehmend Fahrzeuge mit Start-Stop-Funktion und/oder mit Energierückgewinnungsfunktion eingeführt. Hierfür werden Verbrennungsmotoren mit sogenannten Starter-Generatoren verwendet, bei denen eine elektrische Maschine über einen Riementrieb mit der Kurbelwelle des Verbrennungsmotors gekoppelt ist, die sowohl die Funktion einer Lichtmaschine als auch eines Anlassers übernehmen kann. Hierbei sind die beim Anlassen von der elektrischen Maschine auf den Verbrennungsmotor zu übertragenden Drehmomente wesentlich höher als die im Motorbetrieb vom Verbrennungsmotor auf die elektrische Maschine auszuübenden Drehmomente.

Die Antriebsmomente beim Anlaßvorgang können mit Antriebsscheiben der bekannten Art im Riementrieb nur durch Einsatz der Drehanschläge zwischen Nabe und Scheibenkranz aufgefangen werden. Hierbei kommt es zu unerwünschten Belastungsspitzen infolge der Anlagestöße an den Drehanschlägen, die mechanisch und akustisch sehr nachteilig sind.

Hiervon ausgehend ist es Aufgabe der vorliegenden Erfindung, eine Antriebsscheibe der genannten Art vorzuschlagen, die die stark erhöhten Abtriebsmomente eines Starter Generators beim Anlaßvorgang in verbesserter Weise übertragen kann, die kompakt baut, geräuscharm arbeitet, und gleichbleibend gute und frei wählbare Feder- und Dämpfungseigenschaften aufweist.

Die Lösung besteht in einer Antriebsscheibe mit einer Nabe und einem Scheibenkranz, die drehbar ineinander gelagert sind, mit zumindest zwei gewickelten Drahtfedern, die um die Drehachse gewickelt zwischen Nabe und Scheibenkranz angeordnet sind und deren jeweils einer Endbereich gegenüber der Nabe und deren angeordnet sind und deren jeweils einer Endbereich gegenüber der Nabe und deren jeweils anderer Endbereiche gegenüber dem Scheibenkranz im Drehsinn abgestützt ist, und die zwischen den Endbereichen eine nicht abgestützte freie Federlänge haben und die gegeneinander vorgespannt verbaut sind, wobei zumindest eine der Drahtfedern mit einem Endbereich an einem Anlagebereich eines der Teile - Nabe oder Scheibenkranz - anliegt und in Umfangsrichtung anschließend gegenüber einer gekrümmten Abstützfläche an diesem der Teile - Nabe bzw. Scheibenkranz - einen über dem Umfang zunehmenden radialen Abstand hat, wobei der Abstand der zumindest einen Drahtfeder gegenüber der Abstützfläche bei Verdrehung der Teile - Nabe und Scheibenkranz - gegeneinander unter Verlängerung des Anlagebereiches in den Bereich der Abstützfläche hinein und unter Verkürzung der freien Federlänge über dem Umfang fortschreitend bis auf null reduziert wird. Hiermit ist eine Ausgestaltung der zumindest einen Drahtfeder beschrieben, die sich unter zunehmender Vorspannung an einer gekrümmten Abstützfläche abrollt, wobei sich die freie Federlänge zwischen den abgestützten anliegenden Endbereichen verkürzt und dadurch die Federsteifigkeit der zumindest einen Drahtfeder mit zunehmender Auslenkung der Teile der Antriebsscheibe - Scheibenkranz und Nabe - gegeneinander stark progressiv zunimmt. Hat sich die zumindest eine Drahtfeder weitestmöglich an der gekrümmten Abstützfläche angelegt, können die Teile der Antriebsscheibe nicht weiter ausgelenkt werden, d.h. Nabe und Scheibenkranz können nicht weiter gegeneinander verdreht werden, so daß die Antriebsscheibe in zumindest einer Verdrehrichtung der Teile gegeneinander als starre Scheibe betrachtet werde kann.

Ohne daß es zu Belastungsspitzen kommt, können sehr hohe Antriebsmomente übertragen werden. Dies schafft die notwendigen Vorraussetzungen für den Starter-Generator Betrieb, da hierbei der Verbrennungsmotor beim Anlaßvorgang mit seinen gesamten Massenträgheiten gegen die motorische Verdichtung und die innere Reibung angeschleppt werden muß. Die erfindungsgemäße Antriebsscheibe wird hierbei auf der Kurbelwelle des Verbrennungsmotors und/oder auf der Welle der elektrischen Maschine angeordnet, wobei die zumindest eine erfindungsgemäß eingebaute Drahtfeder die ist, welche beim Anlaßvorgang zusätzlich vorgespannt wird.

Die vorgenannte gekrümmte Abstützfläche kann bevorzugt eine innere Zylinderfläche des Scheibenkranzes sein, an die sich die zumindest eine der Drahtfedern in einer Aufweitbewegung fortschreitend anlegt.

In einer alternativen Ausführung kann die gekrümmte Abstützfläche auch eine äußere Zylinderfläche der Nabe sein, auf der sich die entsprechende zumindest eine Drahtfeder im Zuge eines Zuziehens des Krümmungsverlaufes zunehmend aufwickelt.

Nach den beiden vorgenannten Ausführungsformen wird sichergestellt, daß der radiale Abstand der zumindest einen der Drahtfedern von der Abstützfläche im Gleichgewichtszustand der Drahtfedern, d.h. bei nicht mit Drehmoment beaufschlagter Antriebsscheibe in Umfangsrichtung stetig zunimmt. Die Progression der Federkennlinie ist hierbei im wesentlichen gleichmäßig.

Nach einer abweichenden Ausgestaltung kann die gekrümmte Abstützfläche eine innere Zylinderabschnittsfläche mit daran anschließender sich in Umfangsrichtung verengender Spiralfläche im Scheibenkranz sein, an die sich die zumindest eine der Drahtfedern in einer Aufweitbewegung fortschreitend anlegt.

Alternativ zu dieser Ausführung kann die gekrümmte Abstützfläche auch eine äußere Zylinderabschnittsfläche mit daran anschließender sich in Umfangsrichtung erweiternder Spiralfläche auf der Nabe sein, an der sich die entsprechende zumindest eine Drähtfeder im Zuge eines Zuziehens des Krümmungsverlaufes zunehmend aufwickelt.

Nach den beiden letztgenannten Ausführungsformen wird die Möglichkeit eröffnet, daß der radiale Abstand der zumindest einen der Drahtfedern von der Abstützfläche im Gleichgewichtszustand der Drahtfedern, d.h. bei nicht mit Drehmoment beaufschlagter Antriebsscheibe, in Umfangsrichtung zunächst zunimmt und daran anschließend konstant ist und/oder wieder abnimmt. Hiermit ist eine bei zunehmender Drehmomentbelastung zunehmende Progression der Federkennlinie, das heißt eine steigende Verhärtung der zumindest einen Drahtfeder darstellbar.

Die hiermit beschriebene Funktion der sich bei Drehmomentbelastung in einem Drehsinn an der gekrümmten Abstützfläche zunehmend anlegenden Drahtfedern ist jeweils die für die charakteristische Federkurve der Antriebsscheibe ausschlaggebend, während die jeweils zweiten gegensinnig gewickelten Drahtfedern belasteten bei Drehmomentbelastung in diesem Drehsinn von ihrer vorgespannten Einbaulage ausgehend bei Verdrehung der Teile gegeneinander teilentlastet werden. Im Hinblick auf den besonderen Belastungsfall Anlassen können die gegensinnig belasteten Drahffedern voneinander abweichende charakteristische Federkurven aufweisen. Bei Verwendung untereinander gleichartiger Drahtfedern läßt sich jedoch in vorteilhafter Weise eine Reduktion der Teilevielfalt erreichen.

Eine konkrete Federgestaltung liegt in Spiralfedern, die in einer Ebene gewickelt sind und jeweils zwei Endbereiche zur Festlegung mit voneinander abweichenden jedoch gleichbleibendem Krümmungsradius und einen verbindeten sich spiralförmig öffnenden Bereich umfassen.

Grundsätzlich ist die hier angegebene Funktion jedoch auch durch schraubenförmig gewickelte Federn mit größerer axialer Erstreckung darstellbar, wobei die Federgestalt leicht konisch sein kann.

Die gekrümmte Abstützfläche ist in bevorzugter Weise jeweils eine reine Zylinderfläche innen im Scheibenkranz oder außen auf der Nabe. Es ist jedoch nicht ausgeschlossen, am Scheibenkranz oder an der Nabe nicht-konzentrische Abstützflächenbereiche mit speziellem Kurvenverlauf auszuführen, durch den ein sich über dem Umfang ungleichmäßig verändernder radialer Abstand zur Abstützfläche sichergestellt wird. Im Hinblick auf mögliche Unwuchten sind hierbei Gewichtsausgleiche zu schaffen.

Durch die Verwendung von zumindest zwei um die Drehachse gewickelten Drahtfedem innerhalb der Antriebsscheibe wird eine sehr kompakte Bauform realisiert, die die Wirkung der Federung und der Dämpfung weitgehend entkoppelt, indem die Federn nur eine relativ geringe innere Dämpfung haben und für die Einstellung der Dämpfung Reibflächen an Nabe und Scheibenkranz vorgesehen werden können. Drahtfedern sichern eine lange Lebensdauer, die von der Umgebungstemperatur und anderen Umgebungseinflüssen weitgehend unberührt bleibt. Die Anzahl der Bauteile ist gering und ermöglicht einen einfachen, insbesondere rein axialen Zusammenbau. Aufgrund der metallischen Werkstoffe ist die Wärmeableitung unproblematisch.

Wie bereits erwähnt, ist vorgesehen, daß zumindest zwei Drahtfedern gegensinnig gewickelt bzw. gegensinnig eingesetzt und gegeneinander vorgespannt verbaut sind. Hierbei können sich die Federn mit ihren Enden oder Endbereichen an der Nabe bzw. am Scheibenkranz so abstützen, daß Formschluß nur in einer Drehrichtung entsteht. Selbst bei einer maximalen relativen Verdrehung von Nabe und Scheibenkranz zueinander soll eine Vorspannung in beiden gegeneinander vorgespannten Drahtfedern noch gegeben sein, so daß die formschlüssige Anlage der beiden Drahtfedern an den beiden Teilen - Scheibenkranz und Nabe - ständig aufrechterhalten bleibt.

Anstelle der zwei genannten Drahtfedern können auch zwei Gruppen von Drahtfedern in der hier bezeichneten Weise mit gegenseitiger Vorspannung eingesetzt und verbaut werden. Die Federenden können hierbei stumpf abgeschnitten sein und sich an entsprechenden Drehanschlägen an der Nabe und/oder im Scheibenkranz abstützen.

In bevorzugter Ausführung sind - wie bereits erwähnt - die zumindest zwei gegeneinander vorgespannten Drahtfedern jeweils spiralförmig in einer Ebene gewickelt; dies führt zu einer sehr kurzen Bauweise. Die Drahtfedern können hierbei jeweils mehr als eine vollständige Spiralwindung haben.

Zur Einstellung der Dämpfungseigenschaften können Zwischenscheiben oder Stützscheiben vorgesehen werden, die zwischen den Drahtfedern liegen und/oder über die sich die Drahtfedern im Inneren der Nabe axial abstützen.

Auf dem Scheibenkranz kann eine Riemenscheibe für einen Keilriemen, Poly-V-Riemen, einen Zahnriemen oder ein Kettenrad ausgebildet werden, sei es unmittelbar oder als aufgeschobenes Teil.

Zwischen der Nabe und dem Scheibenkranz können Gleit- oder Reibscheiben eingesetzt sein. Weiterhin kann zwischen der Umfangsfläche der Nabe und dem Scheibenkranz eine Gleit- oder Reibhülse verwendet werden. Diese Teile, die beispielsweise aus Kunststoff bestehen können, dienen einerseits zur Einstellung der Spielfreiheit, andererseits kann hiermit die Dämpfungswirkung variiert werden.

In einer günstigen Ausführungsform kann die Nabe aus einem napfförmigen Teil und einem ringnapfförmigen Teil zusammengesetzt sein, wobei das ringnapfförmige Teil auf das napfförmige Teil so aufgesetzt ist, daß die Nabe eine Ringnut bildet, in welcher die Drahtfedern einsitzen. Ergänzend kann hierbei vorgesehen sein, daß der Scheibenkranz eine Trenn- und Führungsscheibe umfaßt, die in die genannte Ringnut der Nabe eingreift, und einen Riemenkranz umfaßt, der mit der Ringnut zwei Ringräume bildet, die von der Trenn- und Führungsscheibe getrennt werden und in denen die beiden gegeneinander vorgespannten Drahtfedern einsitzen. Hierbei können sich die Drahtfedem jeweils an Drehanschlägen an der Nabe einerseits und am Scheibenkranz andererseits unmittelbar abstützen, ohne daß sie eines der beiden Teile durchdringen müssen. Anstelle eines reinen Formschlusses kann auch ein Kraftschluß durch Festklemmen oder Anschweißen treten. Die beiden Teile der Nabe werden hierbei verbaut, nachdem die Drahtfedern und der Scheibenkranz auf den Napfabschnitt des napfförmigen Teils aufgeschoben worden sind. Das napfförmige Teil ebenso wie das ringnapfförmige Teil können als mehrfach abgestufte Tiefziehteile aus Blech hergestellt werden, die jeweils in einer Richtung betrachtet hinterschnittfrei ausgebildet sind.

Zwischen Nabe und Scheibenkranz kann zumindest eine Gleit- oder Reibhülse zur Einstellung der Dämpfungseigenschaften vorgesehen sein, wobei die Gleit- oder Reibhülse insbesondere die Trenn- und Führungsscheibe seitlich und/oder innen einfassen kann.

Die zumindest zwei gegeneinander vorgespannten Drahtfedern werden üblicherweise aus Runddraht gewickelt sein; eine Verwendung von Ovaldraht oder Rechteckdraht zur Verbesserung der Anlage ist möglich. Die Nabe kann mit einem Wellenzapfen oder einer Welle verschraubt werden, wobei die Verschraubungsmittel zur Vereinfachung auch zur Verbindung der beiden Teile der Nabe dienen können. Hierfür kann die Nabe mit einem einfachen Innenflansch, der aus beiden Teilen gebildet wird, ausgebildet werden.

Um bei geringer Anschraubfläche eines Innenflansches der Nabe eine hoch drehmomentbelastbare Verbindung mit dem anschließenden Wellenzapfen sicherstellen zu können, wird vorgeschlagen, die entsprechende Flanschfläche an der Nabe mit einer Stirnverzahnung, insbesondere mit einer Hirthverzahnung zu versehen, die mit einer entsprechenden Gegenverzahnung am Stirnende des anzuschließenden Wellenzapfens zusammenwirken kann. Zur gegenseitigen Verspannung kann eine zentrale Schraube ausreichen, die durch den Innenflansch durchgesteckt und zentral in das Ende des Wellenzapfens eingeschraubt ist.

Zur ergänzenden günstigen Beeinflussung des Schwingungsverhaltens der Welle, insbesondere zur Tilgung hochfrequenter Schwingungen, kann eine ringförmige Tilgermasse über ein Dämpfergummi mit der Nabe schwingungsfähig verbunden sein.

Bevorzugte Ausführungsbeispiele der Erfindung sind in den Zeichnungen dargestellt und werden nachstehend beschrieben.
- Figur 1: zeigt eine erfindungsgemäße Antriebsscheibe in einer ersten Ausführung im Zusammenbau
a) in Axialansicht
b) in radialer Seitenansicht
c) im Längsschnitt A-A nach Darstellung a);
- Figur 2: zeigt den Scheibenkranz der Antriebsscheibe nach Figur 1 als Einzelheit mit Drahtfedern
a) in Axialansicht
b) in radialer Stirnansicht
c) im Längsschnitt C-C nach Darstellung a)
d) im Längsschnitt B-B nach Darstellung a);
- Figur 3: zeigt eine erfindungsgemäße Antriebsscheibe in einer zweiten Ausführung im Zusammenbau
a) in Axialansicht
b) im Längsschnitt A-A nach Darstellung
c) im Längsschnitt B-B nach Darstellung a)
d) in radialer Seitenansicht
e) im Querschnitt C-C nach Darstellung d);
- Figur 4: zeigt den Scheibenkranz der Antriebsscheibe nach Figur 3 als Einzelheit mit Drahtfedem
a) in Axialansicht
b) im Längsschnitt A-A nach Darstellung a)
c) im Längsschnitt B-B nach Darstellung a).
d) in radialer Seitenansicht
e) im Querschnitt C-C nach Darstellung d).
- Figur 5: zeigt die Federkennlinie einer erfindungsgemäß verbauten Drahtfeder über dem Drehwinkel
- Figur 6: zeigt die Kennlinie einer erfindungsgemäßen Antriebsscheibe und die Federkennlinie jeweils über dem Drehwinkel

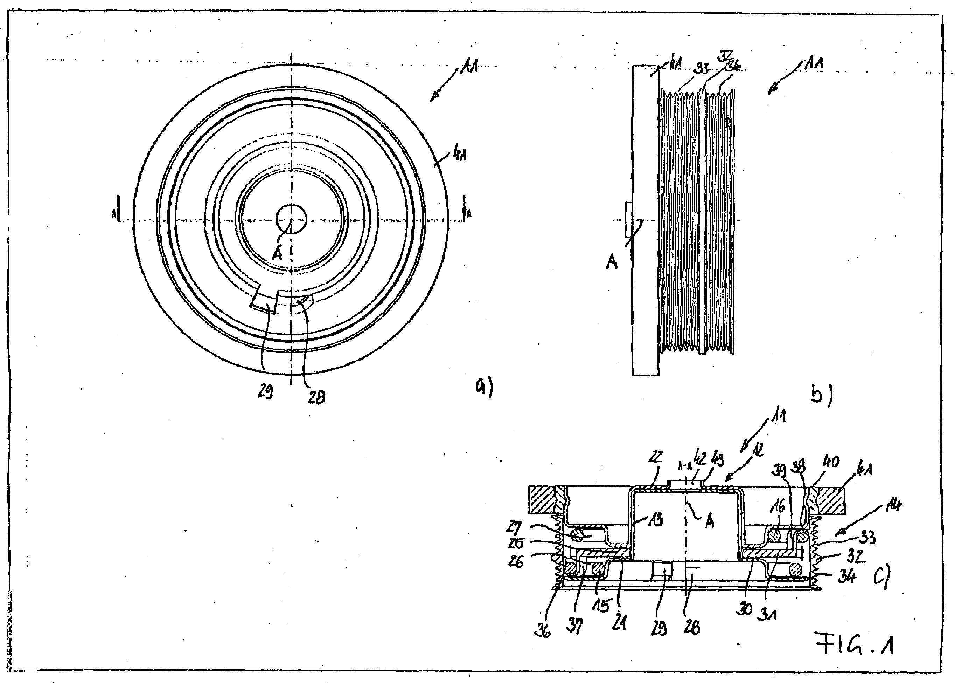

In Figur 1 ist eine erfindungsgemäße Antriebsscheibe 11 in axialer Ansicht (a), in radialer Ansicht (b) und im Längsschnitt (c) dargestellt. Die Antriebsscheibe 11 umfaßt eine Nabe 12, die an einem Wellenzapfen mittels Verschraubungsmitteln angeschraubt werden kann. Sie umfaßt weiterhin einen Scheibenkranz 14, der mit der Nabe 12 über zwei spiralförmig gewickelte Drahtfedern 15, 16 drehelastisch verbunden ist. Die Drahtfedern 15, 16 sind jeweils in mehr als einer Windung spiralförmig gewickelt und können sich jeweils mit einem Ende im Drehsinn formschlüssig am Scheibenkranz 14 und mit dem anderen Ende im Drehsinn formschlüssig an der Nabe 12 abstützen. Die Nabe 12 ist aus einem ersten von der ersten Außenseite gesehen napfförmigen Teil 21 und einem zweiten von der zweiten Außenseite gesehenem ringnapfförmigen Teil 22 zusammengesetzt, wobei die Teile durch axiale Verpressung zu einem Preßsitz 13 axial und drehfest fest miteinander verbunden sind. Das napfförmige Teil 21 ist hierbei im Innenbereich in das ringnapfförmige Teil 22 eingeschoben. Die Nabe 12 bildet hierbei eine in der Breite gestufte Ringnut 25 mit zueinander parallelen Flanken. Das napfförmige Teil 21 ist ein Blechteil von etwa konstanter Wandstärke, das mehrfach gestuft ist und zwei Zylinderabschnitte bildet. Das Teil 21 ist axial hinterschnittfrei. Es ist insbesondere als Tiefziehteil ausführbar. Das zweite ringnapfförmige Teil 22 ist ebenfalls als Blechteil von etwa konstanter Wandstärke ausgebildet, das mehrfach gestuft ist und drei Zylinderabschnitte bildet. Das zweite ringnapfförmige Teil 22 ist ebenfalls axial hinterschnittfrei und kann ebenfalls als Tiefziehteil hergestellt werden. Mit dem im Durchmesser kleinsten Zylinderabschnitt sitzt das Teil 22 auf dem kleinsten Zylinderabschnitt des ersten ringnapfförmigen Teils 21 auf und bildet mit diesem die Ringnut 25, die einen schmaleren tieferen Teil und einen breiteren weniger tiefen Teil umfaßt. Am ringnapfförmigen Teil 22 ist zentral eine Hülse 43 angeformt. Eine Durchstecköffnung 42 kann eine Zentralschraube aufnehmen

Vor dem Fügen der Teile 21 und 22 sind die Drahtfedern 15, 16 und dazwischen der einstückig ausgeführte Scheibenkranz 14 axial zwischen beiden Drahtfedern einzusetzen. Der Scheibenkranz 14 umfaßt eine etwa mittig ausgebildete radiale Führungsscheibe 31 und einen den Riemensitz 33,34 für zwei Poly-V-Riemen bildenden Riemenkranz 32. Mittels einer im Querschnitt U-förmigen Gleit- oder Reibhülse 30 ist die Führungsscheibe 31 im tieferen schmaleren Teil der Ringnut 25 der Nabe 12 geführt. Gleichzeitig bildet die Führungsscheibe 31 mit der Nabe 12 zwei Ringräume 26, 27 für die beiden Drahtfedem 15, 16. Während am ersten napfförmigen Teil 21 der Nabe 12 ein innerer Drehanschlag 38 und eine Führungsöse 39 für die Drahtfeder 15 erkennbar sind, die jeweils aus dem Blech ausgeformt sind, sind am anderen ringnapfförmigen Teil 22 der Nabe 12 ein entsprechender innerer Drehanschlag und eine entsprechende Führungsöse für die Drahtfeder 16 ebenfalls vorgesehen, jedoch hier nicht erkennbar. Diese Teile sind jeweils aus dem Blech ausgeprägt.

Nach der Montage sollen beide Drahtfedern 15, 16 gegeneinander vorgespannt sein, d.h. jeweils gegenüber ihrer entspannten Ausgangslage radial aufgespreizt sein. Bei jeder relativen Verdrehung zwischen Nabe 12 und Scheibenkranz 14 wird eine der Federn zusätzlich gespannt, während die zweite Feder entspannt wird, ohne daß sie dabei ganz entlastet werden soll, d.h. die unter Vorspannungskraft stehende Anlage am jeweiligen Drehanschlag soll erhalten bleiben. Die Dämpfung erfolgt zum einen über die innere Materialdämpfung der Drahtfedern 15, 16 und zum anderen über die relative Oberflächenreibung zwischen der Führungsscheibe 31 des Scheibenkranzes 14 und der Ringnut 25 in der Nabe 12, die durch die Eigenschaften und die Verbauung der Gleit- oder Reibhülse 30 eingestellt werden kann.

Auf dem größten Zylinderabschnitt des ringnapfförmigen Teils 22 ist darüberhinaus eine ringförmige Tilgermasse 41 angeordnet, die über ein aufvulkanisiertes Dämpfergummi 40 drehschwingungsfähig gegenüber der Nabe 12 zur Tilgung hochfrequenter Schwingungen ausgebildet ist. Hiermit sind Schwingungen eines Wellenzapfens vom Scheibenkranz 14 wirksam zu isolieren.

Die Drehachse der Antriebsscheibe 11 ist mit A bezeichnet. Sie ist zugleich die Drehachse der Antriebsscheibe 11 als ganzes als auch die Drehachse er relativen Verdrehung von Nabe 12 und Scheibenkranz 14 zueinander.

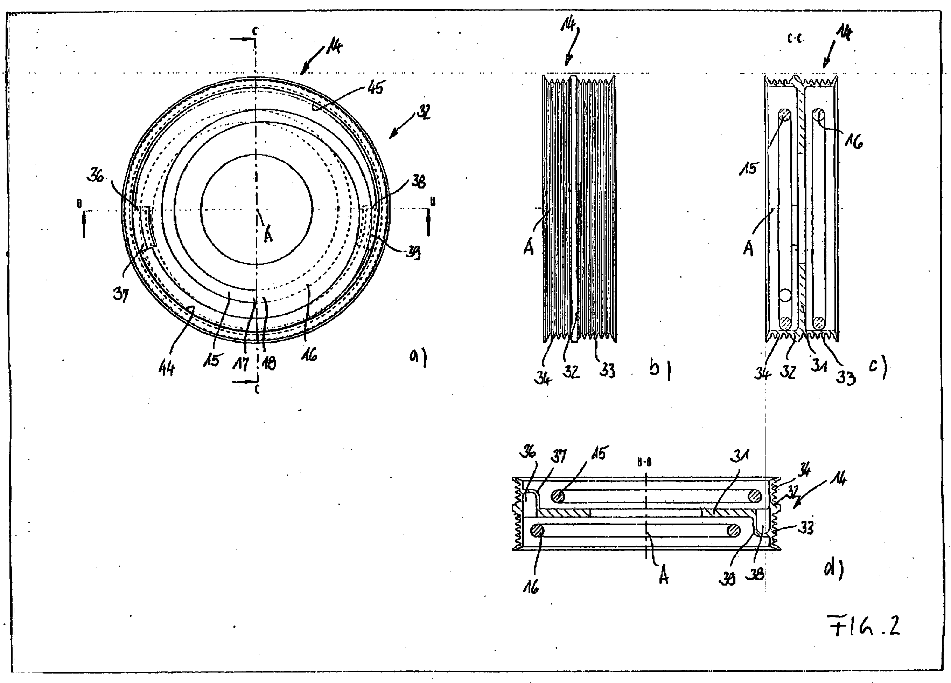

In Figur 2 ist die Antriebsscheibe 14 nach Figur 1 als Baugruppe mit den Drahtfedem 15, 16 gezeigt, wobei gleiche Einzelheiten mit gleichen Bezugsziffern bezeichnet sind. Es sind im einzelnen erkennbar die Drahtfeder 15, der Scheibenkranz 14 und die Drahtfeder 16. Am Scheibenkranz 14 ist ein äußerer Drehanschlag 36 und eine Führungsöse 37 für die Drahtfeder 15, sowie ein äußerer Drehanschlag 38 und eine Führungsöse 39 für die Drahtfeder 16 gezeigt. Der Scheibenkranz 14 ist ein Blechumformteil, wobei der Riemenkranz 32 am Scheibenkranz 14 aus einem radial gespaltenen Außenrand einer Platine hergestellt sein soll. An der vorne liegenden Drahtfeder 15 sind zwei Endbereiche mit gleichmäßiger Krümmung von unterschiedlichem Radius und ein verbindender spiraliger Bereich erkennbar. Der Endbereich mit größerem Radius liegt an dem zylindrischen Anlagebereich 44 des Riemenkranzes 32 an, während der spiralige Bereich mit dem zylindrischen Abstützbereich 45 des Riemenkranzes 32 einen über dem Umfang zunehmendem Abstand einschließt. Dieser Abstand wird bei einem Verdrehen der Nabe und damit des inneren Federendes 17 gegenüber dem Scheibenkranz 14 nach rechts infolge eines Aufweitens der Feder 15 im Gegenuhrzeigersinn fortschreitend zu null. Hierbei verkürzt sich die nicht anliegende verformbare freie Federlänge und die Kennlinie der Antriebsscheibe wird zunehmend steifer. Für die gegensinnig gewickelte hintenliegende, gestrichelte Drahtfeder 16 gilt entsprechend das gleiche für ein Verdrehen der Nabe und damit des inneren Federendes 18 gegen den Scheibenkranz 14 nach links, was dann zu einem Aufweiten der Drahtfeder 16 führt.

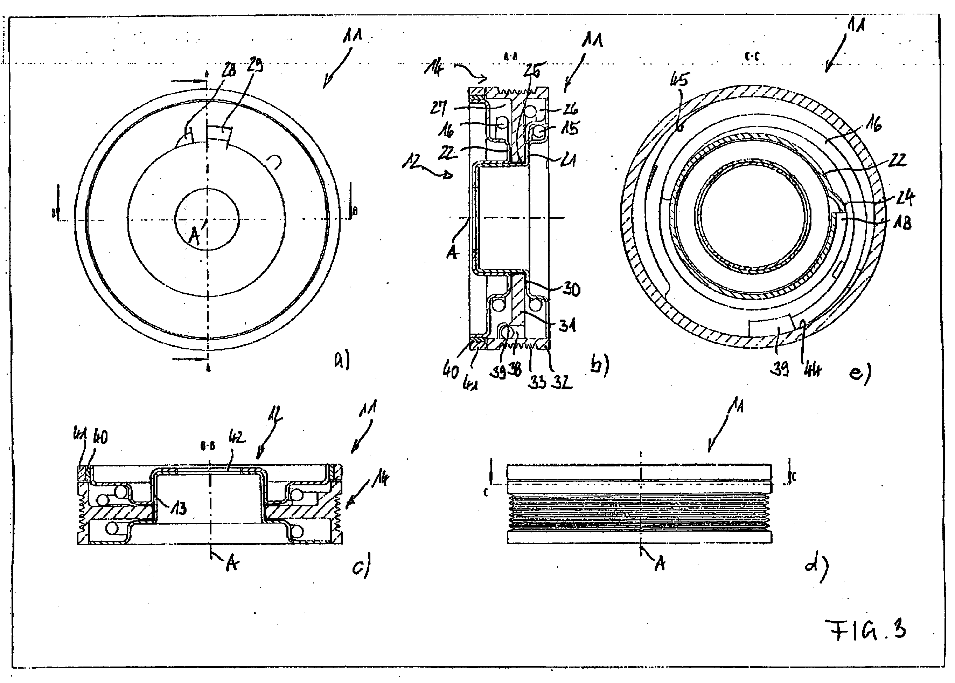

In Figur 3 ist eine erfindungsgemäße Antriebsscheibe 11 in einer weiteren Ausführungsform gezeigt, und zwar in axialer Ansicht (a), in einem ersten Längsschnitt (b) gemäß Schnittlinie A-A aus Ansicht (a), in einem zweiten Längsschnitt (c) gemäß Schnittlinie B-B aus Ansicht (a), in radialer Ansicht (d) und im Querschnitt gemäß Schnittlinie C-C aus Ansicht (d). Die Antriebsscheibe 11 umfaßt eine Nabe 12, die an einem Wellenzapfen mittels Verschraubungsmitteln angeschraubt werden kann. Sie umfaßt weiterhin einen Scheibenkranz 14, der mit der Nabe 12 über zwei spiralförmig gewickelte Drahtfedern 15, 16 drehelastisch verbunden ist. Die Drahtfedern 15, 16 sind jeweils in mehr als einer Windung spiralförmig gewickelt und können sich jeweils mit einem abgeschnittenen Ende im Drehsinn formschlüssig am Scheibenkranz 14 und mit dem anderen Ende im Drehsinn formschlüssig an der Nabe 12 abstützen. Die Nabe 12 ist aus einem ersten von der ersten Außenseite gesehen napfförmigen Teil 21 und einem zweiten von der zweiten Außenseite gesehenen ringnapfförmigen Teil 22 zusammengesetzt, wobei die Teile durch axiale Verpressung zu einem Preßsitz 13 axial und drehfest fest miteinander verbunden sind. Das napfförmige Teil 21 ist hierbei im Innenbereich in das ringnapfförmige Teil 22 eingeschoben. Die Nabe 12 bildet hierbei eine in der Breite gestufte Ringnut 25 mit zueinander parallelen Flanken. Das napfförmige Teil 21 ist ein Blechteil von etwa konstanter Wandstärke, das mehrfach gestuft ist und zwei Zylinderabschnitte bildet. Das Teil 21 ist axial hinterschnittfrei. Es ist insbesondere als Tiefziehteil ausführbar. Das zweite ringnapfförmige Teil 22 ist ebenfalls als Blechteil von etwa konstanter Wandstärke ausgebildet, das mehrfach gestuft ist und drei Zylinderabschnitte bildet. Das zweite ringnapfförmige Teil 22 ist ebenfalls axial hinterschnittfrei und kann ebenfalls als Tiefziehteil hergestellt werden. Mit dem im Durchmesser kleinsten Zylinderabschnitt sitzt das Teil 22 auf dem kleinsten Zylinderabschnitt des ersten ringnapfförmigen Teils 21 auf und bildet mit diesem die Ringnut 25, die einen schmaleren tieferen Teil und einen breiteren weniger tiefen Teil umfaßt. Eine Durchstecköffnung 42 kann eine Zentralschraube aufnehmen.

Vor dem Fügen der Teile 21 und 22 sind die Drahtfedern 15, 16 und dazwischen der einstückig ausgeführte Scheibenkranz 14 axial zwischen beiden Drahtfedern einzusetzen. Der Scheibenkranz 14 umfaßt eine etwa mittig ausgebildete radiale Führungsscheibe 31 und einen den Riemensitz 33 für einen Poly-V-Riemen bildenden Riemelnkranz 32. Mittels einer im Querschnitt U-förmigen Gleit- oder Reibhülse 30 ist die Führungsscheibe 31 im tieferen schmaleren Teil der Ringnut 25 der Nabe 12 geführt. Gleichzeitig bildet die Führungsscheibe 31 mit der Nabe 12 zwei Ringräume 26, 27 für die beiden Drahtfedern 15, 16. Während am ersten napfförmigen Teil 21 der Nabe 12 ein innerer Drehanschlag 38 und eine Führungsöse 39 für die Drahtfeder 15 erkennbar sind, die jeweils aus dem Blech ausgeformt sind, sind am anderen ringnapfförmigen Teil 22 der Nabe 12 ein entsprechender innerer Drehanschlag 24 und eine entsprechende Führungsöse für die Drahtfeder 16 ebenfalls vorgesehen, jedoch ist letztere hier nicht erkennbar. Diese Teile sind jeweils aus dem Blech ausgeprägt.

Nach der Montage sollen beide Drahtfedern 15, 16 gegeneinander vorgespannt sein, d.h. jeweils gegenüber ihrer entspannten Ausgangslage radial aufgespreizt sein. Bei jeder relativen Verdrehung zwischen Nabe 12 und Scheibenkranz 14 wird eine der Federn zusätzlich gespannt, während die zweite Feder entspannt wird, ohne daß sie dabei! ganz entlastet werden soll, d.h, die unter Vorspannungskraft stehende Anlage am jeweiligen Drehanschlag soll erhalten bleiben. Die Dämpfung erfolgt zum einen über die innere Materialdämpfung der Drahtfedern 15, 16 und zum anderen über die relative Oberflächenreibung zwischen der Führungsscheibe 31 des Scheibenkranzes 14 und der Ringnut 25 in der Nabe 12, die durch die Eigenschaften und die Verbauung der Gleit- oder Reibhülse 30 eingestellt werden kann.

Am Scheibenkranz 14 ist ein äußerer Drehanschlag 38 und eine Führungsöse 39 für die Drahtfeder 16 gezeigt. Der Scheibenkranz 14 ist ein Blechumformteil, wobei die Riemenscheibe 32 am Scheibenkranz 14 aus einem radial gespaltenen Außenrand einer Platine hergestellt sein soll. An der Drahtfeder 16 sind zwei Endbereiche mit gleichmäßiger Krümmung von unterschiedlichem Radius und ein verbindender spiraliger Bereich erkennbar. Der Endbereich mit größerem Radius liegt an dem zylindrischen Anlagebereich 44 des Riemenkranzes 32 an, während der spiralige Bereich mit dem zunächst zylindrischen und sich dann spiralig verengenden Abstützbereich 45 des Riemenkranzes 32 einen über dem Umfang zunächst zunehmenden und dann in Umfangsrichtung anschließend abnehmenden und dann gleichbleibenden Abstand einschließt. Dieser Abstand wird bei einem Verdrehen der Nabe 12 und damit des inneren Federendes 18 gegenüber dem Scheibenkranz 14 nach rechts infolge eines Aufweitens der Feder 16 im Gegenuhrzeigersinn fortschreitend zu null. Hierbei verkürzt sich die nicht anliegende verformbare freie Federlänge und die Kennlinie der Antriebsscheibe wird mit zunehmender Progression steifer.

Auf dem größten Zylinderabschnitt des ringnapfförmigen Teils 22 ist darüberhinaus eine ringförmige Tilgermasse 41 angeordnet, die über ein aufvulkanisiertes Dämpfergummi 40 drehschwingungsfähig gegenüber der Nabe 12 zur Tilgung hochfrequenter Schwingungen ausgebildet ist. Hiermit sind Schwingungen eines Wellenzapfens vom Scheibenkranz 14 wirksam zu isolieren.

Die drehachse der Antriebsscheibe 11 ist mit A bezeichnet. Sie ist zugleich die Drehachse der Antriebsscheibe 11 als ganzes als auch die Drehachse der relativen Verdrehung von Nabe 12 und Scheibenkranz 14 zueinander.

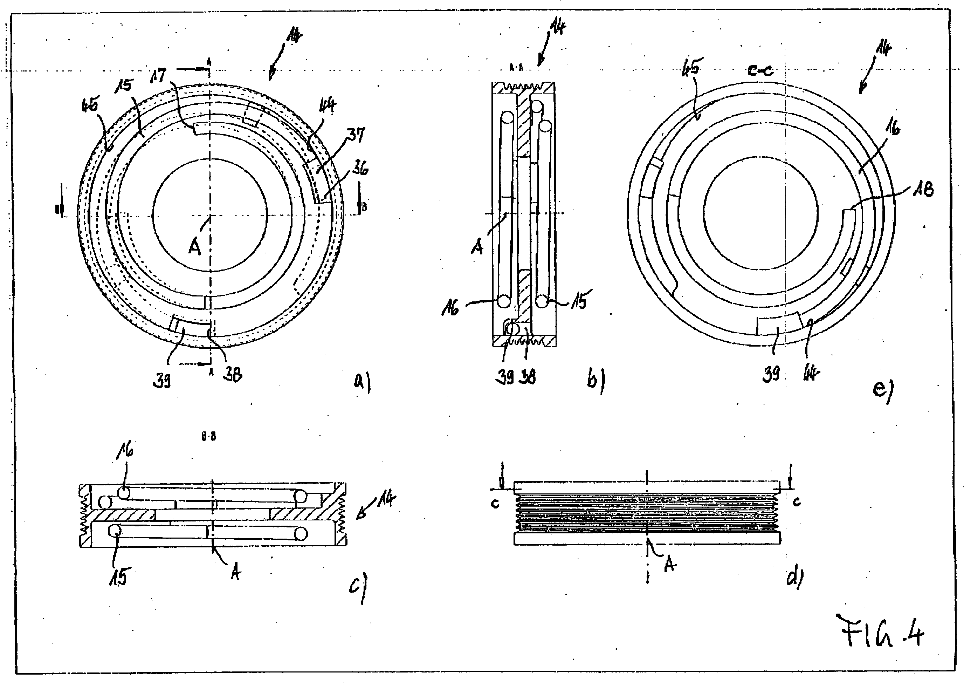

In Figur 4 ist die Antriebsscheibe 14 nach Figur 3 als Baugruppe mit den Drahtfedern 15, 16 gezeigt, wobei gleiche Einzelheiten mit gleichen Bezugsziffern bezeichnet sind. Es sind im einzelnen erkennbar die Drahtfeder 15, der Scheibenkranz 14 und die Drahtfeder 16. Am Scheibenkranz 14 ist ein äußerer Drehanschlag 36 und eine Führungsöse 37 für die Drahtfeder 15, sowie ein äußerer Drehanschlag 38 und eine Führungsöse 39 für die Drahtfeder 16 gezeigt. Der Scheibenkranz 14 ist ein Blechumformteil, wobei der Riemenkranz 32 am Scheibenkranz 14 aus einem radial gespalterten Außenrand einer Platine hergestellt sein soll.

Die in Darstellung a) erkennbare Drahtfeder 15 ist radial außen mit einem ersten Endbereich in die Führungsöse 37 eingeführt und gegen den Drehanschlag 36 in Umfangsrichtung abgestützt und liegt dort an dem zylindrischen Anlagebereich 44 des Scheibenkranzes 14 an, der formgleich in den zylindrischen Abstützbereich 45 übergeht. An den ersten Endbereich schließt sich ein spiralförmiger Bereich an, der sich etwa über 225° erstreckt. Der spiralige Bereich schließt mit dem zylindrischen Abstützbereich 45 des Scheibenkranzes 14 einen über dem Umfang zunehmenden Abstand ein. An diesen spiraligen Bereich der Drahtfeder 15 ist ein innerer zweiter Endabschnitt mit gleichmäßiger Krümmung, das heißt mit konstantem Radius, angeschlossen, der sich etwa über 180° erstreckt. Bei einem Verdrehen der Nabe 12 und damit des inneren Federendes 17 gegenüber dem Scheibenkranz 14 nach rechts wird der zwischen der Drahtfeder 15 und dem Abstützbereich 45 gebildete Abstand infolge eines Aufweitens der Feder 15 im Gegenuhrzeigersinn fortschreitend zu null. Hierbei verkürzt sich die nicht anliegende verformbare freie Federlänge und die Kennlinie der Antriebsscheibe wird zunehmend steifer.

Für die in Darstellung e) erkennbare Drahtfeder 16 gilt entsprechend das gleiche für ein Verdrehen der Nabe und damit des inneren Federendes 18 gegen den Scheibenkranz 14 nach rechts, was dann zu einem Aufweiten der Drahtfeder 16 führt. Wie hier ersichtlich, umfaßt die Abstützfläche 45 eine innere Zylinderabschnittsfläche und eine sich in Umfangsrichtung daran anschließende sich verengende Spiralfläche, die auch als Rampe bezeichnet werden kann. Dabei ist insbesondere vorgesehen, daß sich der radiale Abstand, an der unbelasteten Antriebsscheibe ausgehend von dem Abstützbereich 44, zwischen der Drahtfeder 16 und der Abstützfläche 45 in Umfangsrichtung zunächst stetig zunimmt und daran anschließend im Bereich der Spiralfläche etwa konstant ist und/oder geringfügig abnimmt. Bei Verdrehung der beiden Teile, Nabe 12 und Scheibenkranz 14, gegeneinander Verlängert sich der Anlagebereich 44 in den Bereich der Abstützfläche 45, und zwar unter Verkürzung der freien wirksamen Federlänge über dem Umfang fortschreitend.

Setbstverständlich kann auch die Abstützfläche für die Drahtfeder 15 eine innere Zylinderabschnittsfläche und eine sich in Umfangsrichtung daran anschließende sich verengende Spiralfläche aufweisen, wie es für die Drahtfeder 16 der Fall ist.

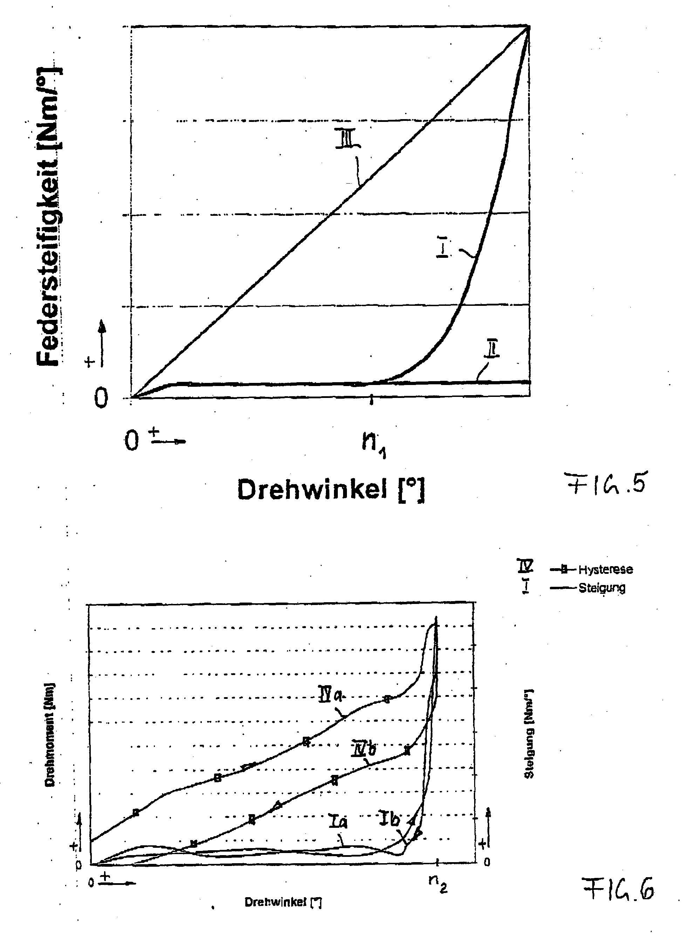

Figur 5 zeigt die erfindungsgemäße Kennlinie I einer der Drahtfedern, die zunächst weitgehend linear und ab einem Drehwinkel von n₁ stark progressiv verläuft, im Vergleich mit einer rein linearen Kennlinie II nach dem Stand der Technik und mit einer rein progressiven Kennlinie III nach dem Stand der Technik. Der Drehwinkel wird üblicherweise in ° (Winkelgrad), die Federsteifigkeit in Nm/° (Drehmoment pro Winkelgrad) angegeben.

Figur 6 zeigt den Verlauf des Drehmoments der erfindungsgemäßen Antriebsscheibe über dem Drehwinkel mit dem ansteigenden Ast IVa und den abfallenden Ast IVb sowie weiterhin die bereits oben prinzipiell dargestellte erfindungsgemäßen Federkennlinie einer der Drahtfedern, die hier mit dem Begriff Steigung bezeichnet ist, mit dem ansteigenden Ast I a und dem abfallenden Ast I b. Im jeweils steil ansteigenden Teil der Kennlinie nahe n₂ versteift die Antriebsscheibe vollständig, ohne, daß es zu einem; merklichen Stoß kommt. Das Drehmoment wird üblicherweise in Nm angegeben, der Drehwinkel auch hier in ° (Winkelgrad) und die Steigung oder Federsteifigkeit in Nm/° (Drehmoment pro Winkelgrad).

Der Drehwinkel ist jeweils jeweils der relative Verdrehwinkel zwischen Scheibenkranz und Nabe, ausgehend von der Gleichgewichtsstellung der Drahtfedern.

### Bezugszeichenliste

- 11, 51: Antriebsscheibe
- 12: Nabe
- 13: Preßsitz
- 14: Scheibenkranz
- 15: Drahtfeder
- 16: Drahtfeder
- 17: Ende (Drahtfeder)
- 18: Ende (Drahtfeder)
- 19:
- 20:
- 21: napfförmiges Teil (Nabe)
- 22: napfförmiges Teil (Nabe)
- 23: Innenflansch (Nabe)
- **24**: Anschlag innen
- **25**: Ringnut
- 26: Ringraum
- 27: Ringraum
- 28: Anschlag innen
- 29: Öse innen
- 30: Gleit- oder Reibhülse
- 31: Führungsscheibe
- 32: Riemenkranz
- 33: Riemensitz
- 34: Riemensitz
- 35:
- 36: Anschlag außen
- 37: Öse außen
- 38: Anschlag außen
- 39: Öse außen
- 40: Dämpfergummi
- 41: Tilgermasse
- 42: Durchstecköffnung
- 43: Hülsenansatz
- 44: Anlagebereich
- 45: Abstützfläche

## Patentansprüche

1. Antriebsscheibe (11) mit einer Nabe (12) und einem Scheibenkranz (14), die drehbar um eine Drehachse ineinander gelagert sind, mit zumindest zwei gewickelten Drahtfedern (15, 16), die um die Drehachse gewickelt jeweils zwischen Nabe und Scheibenkranz angeordnet sind und deren jeweils eines Ende gegenüber der Nabe (12) und deren jeweils anderes Ende gegenüber dem Scheibenkranz (14) im Drehsinn abgestützt ist, und die zwischen den Enden eine nicht abgestützte freie Federlänge haben und gegeneinander vorgespannt verbaut sind,
**dadurch gekennzeichnet,**
**daß** zumindest eine der Drahtfedern (15, 16) mit einem Ende an einem Anlagebereich (44) eines der Teile - Nabe (12) oder Scheibenkranz (14) - anliegt und in Umfangsrichtung anschtießend gegenüber einer gekrümmten Abstützfläche (45) an diesem der Teile - Nabe (12) bzw. Scheibenkranz (14) - einen über dem Umfang zunehmenden radialen Abstand hat, wobei der Abstand der zumindest einen der Drahtfedern von der Abstützfläche bei Verdrehung der Teile - Nabe (12) und Scheibenkranz (14) - gegeneinander unter Verlängerung des Anlagebereiches (44) in den Bereich der Abstützfläche (45) hinein und unter Verkürzung der freien Federlänge über dem Umfang fortschreitend bis auf null reduziert wird.

2. Antriebsscheibe nach Anspruch 1,
**dadurch gekennzeichnet,**
**daß** der radiale Abstand der zumindest einen der Drahtfedern (15, 16) von der Abstützfläche (45) an der unbelasteten Antriebsscheibe (11) ausgehend vom Anlagebereich (44) in Umfangsrichtung stetig zunimmt. (Fig. 1, 2)

3. Antriebsscheibe nach Anspruch 1,
**dadurch gekennzeichnet,**
**daß** der radiale Abstand der zumindest einen der Drahtfedern (15, 16) von der Abstützfläche (45) an der unbelasteten Antriebsscheibe (11) ausgehend vom Anlagebereich (44) in Umfangsrichtung zunächst zunimmt und daran anschließend konstant ist und/oder wieder abnimmt. (Fig. 3, 4)

4. Antriebsscheibe nach Anspruch 1 oder 2,
**dadurch gekennzeichnet,**
**daß** die gekrümmte Abstützfläche (45) eine innere Zylinderfläche des Scheibenkranzes (14) ist.

5. Antriebsscheibe nach Anspruch 1 oder 2,
**dadurch gekennzeichnet,**
**daß** die gekrümmte Abstützfläche (45) eine äußere Zylinderfläche der Nabe (12) ist.

6. Antriebsscheibe nach einem der Ansprüche 1 oder 3,
**dadurch gekennzeichnet,**
**daß** die gekrümmte Abstützfläche (45) eine innere Zylinderabschnittsfläche mit daran anschließende sich verengender Spiralfläche im Scheibenkranz (14) ist.

7. antriebsscheibe nach einem der Ansprüche 1 oder 3,
**dadurch gekennzeichnet,**
**daß** die gekrümmte Abstützfläche (45) eine äußere Zylinderabschnittsfläche mit daran anschließender sich erweiternder Spiralfläche an der Nabe (12) ist.

8. Antriebsscheibe nach einem der Ansprüche 4 oder 6,
**dadurch gekennzeichnet,**
**daß** die zumindest zwei gewickelten Drahtfedern (15, 16)im gegeneinander vorgespannten Einbauzustand gegenüber ihrer entspannten Form radial aufgeweitet sind.

9. Antriebsscheibe nach einem der Ansprüche 5 oder 7,
**dadurch gekennzeichnet,**
**daß** die zumindest zwei gewickelten Drahtfedern (15, 16) im gegeneinander vorgespannten Einbauzustand gegenüber ihrer entspannten Form radial zusammengezogen sind.

10. Antriebsscheibe nach einem der Ansprüche 1 bis 9,
**dadurch gekennzeichnet,**
**daß** die zumindest zwei gewickelten Drahtfedern (15, 16) voneinander abweichende Federkennlinien aufweisen.

11. Antriebsscheibe nach einem der Ansprüche 1 bis 10,
**dadurch gekennzeichnet,**
**daß** die zumindest zwei gewickelten Drahtfedern (15, 16) gruppenweise voneinander abweichende Anzahl haben.

12. Antriebsscheibe nach einem der Ansprüche 1 bis 11,
**dadurch gekennzeichnet,**
**daß** die zumindest eine der Drahtfedern (15, 16) jeweils Endbereiche mit voneinander unterschiedlichen, jeweils konstanten Radien und einen spiralförmigen Zwischenbereich umfaßt

13. Antriebsscheibe nach einem der Ansprüche 1 bis 12,
**dadurch gekennzeichnet,**
**daß** die zumindest eine der Drahtfedern (15, 16) in einer Ebene gewickelt ist.

14. Antriebsscheibe nach einem der Ansprüche 1 bis 13,
**dadurch gekennzeichnet,**
**daß** die Nabe (12) aus zwei tiefgezogenen Blechteilen (21, 22) zusammengesetzt ist.

15. Antriebsscheibe nach einem der Ansprüche 1 bis 14,
**dadurch gekennzeichnet,**
**daß** die Nabe (12) aus einem ersten napfförmigen Teil (21) und einem zweiten ringnapfförmigen Teil (22) zusammengesetzt ist, wobei zwei zylindrische Bereiche im Preßsitz (13) ineinandergesetzt sind und wobei die Nabe eine Ringnut (25) bildet, in welcher die Drahtfedern (15, 16) einsitzen und der Scheibenkranz (14) geführt ist.

16. Antriebsscheibe nach einem der Ansprüche 1 bis 15,
**dadurch gekennzeichnet,**
**daß** der Scheibenkranz (14) eine Führungsscheibe (31) umfaßt, die in die Ringnut (25) der Nabe (12) eingreift, und einen Riemenkranz (32) umfaßt, der mit der Nabe (12') zwei Ringräume (26, 27) bildet, die von der Führungsscheibe (31) getrennt sind.

## Claims

1. Drive pulley (11) with a hub (12) and a pulley rim (14), which are mounted in one another so as to be rotatable about a rotational axis, with at least two wound wire springs (15, 16) which are arranged in each case between the hub and the pulley rim in such a manner that they are wound around the rotational axis, with in each case one end being supported in the direction of rotation with respect to the hub (12) and the in each case the other end being supported in the direction of rotation with respect to the pulley rim (14), and which form a non-supported free spring length between the ends and which are installed in such a manner that they are pretensioned with respect to each other,
**characterised in that**
at least one of the wire springs (15, 16) bears at one end against a bearing region (44) of one of the parts - hub (12) and pulley rim (14) - and then has a radial distance with respect to a curved supporting face (45) on this one of the parts - hub (12) and pulley rim (14) respectively - which distance increases over the circumference and is reduced progressively to zero over the circumference when the parts - hub (12) and pulley rim (14) - are rotated with respect to each other, while the bearing region (44) is extended into the region of the supporting face (45) and the free spring length is shortened.

2. Drive pulley according to Claim 1,
**characterised in that**
the radial distance of the at least one of the wire springs (15, 16) from the supporting face (45) on the unloaded drive pulley (11) increases continuously in the circumferential direction starting from the bearing region (44). (Fig. 1, 2)

3. Drive pulley according to Claim 1,
**characterised in that**
the radial distance of the at least one of the wire springs (15, 16) from the supporting face (45) on the unloaded drive pulley (11) increases first and is then constant and/or decreases in the circumferential direction starting from the bearing region (44). (Fig. 3, 4)

4. Drive pulley according to Claim 1 or 2,
**characterised in that**
the curved supporting face (45) is an inner cylinder face of the pulley rim (14).

5. Drive pulley according to Claim 1 or 2,
**characterised in that**
the curved supporting face (45) is an outer cylinder face of the hub (12).

6. Drive pulley according to one of Claims 1 or 3,
**characterised in that**
the curved supporting face (45) is an inner cylinder section face in the pulley rim (14) with an adjoining, narrowing spiral face (46).

7. Drive pulley according to one of Claims 1 or 3,
**characterised in that**
the curved supporting face (45) is an outer cylinder section face on the hub (12) with an adjoining, widening spiral face.

8. Drive pulley according to one of Claims 4 or 6,
**characterised in that**
the at least two wound wire springs (15, 16), in an installed condition in which they are pretensioned with respect to each other, are radially widened compared to their untensioned shape.

9. Drive pulley according to one of Claims 5 or 7,
**characterised in that**
the at least two wound wire springs (15, 16), in an installed condition in which they are pretensioned with respect to each other, are radially constricted compared to their untensioned shape.

10. Drive pulley according to one of Claims 1 to 9,
**characterised in that**
the at least two wound wire springs (15, 16) have spring characteristics which differ from each other.

11. Drive pulley according to one of Claims 1 to 10,
**characterised in that**
the groups of the at least two wound wire springs (15, 16) have quantities which differ from each other.

12. Drive pulley according to one of Claims 1 to 11,
**characterised in that**
the at least one of the wire springs (15, 16) comprises in each case end regions with different, in each case constant radii and a spiral-shaped intermediate region.

13. Drive pulley according to one of Claims 1 to 12,
**characterised in that**
the at least one of the wire springs (15, 16) is wound spirally in one plane.

14. Drive pulley according to one of Claims 1 to 13,
**characterised in that**
the hub (12) is composed of two deep-drawn sheet metal parts (21, 22).

15. Drive pulley according to one of Claims 1 to 14,
**characterised in that**
the hub (12) is composed of a first cup-shaped part (21) and a second annular cup-shaped part (22), wherein two cylindrical regions are placed inside each other in a press fit (13) and wherein the hub forms an annular groove (25) in which the wire springs (15, 16) are arranged and the pulley rim (14) is guided.

16. Drive pulley according to one of Claims 1 to 15,
**characterised in that**
the pulley rim (14) comprises a guide pulley (31), which engages in the annular groove (25) of the hub (12), and a belt rim (32) which forms two annular spaces (26, 27) with the hub (12), which spaces are separated from the guide pulley (31).

## Revendications

1. Disque ou poulie d'entraînement (11) comprenant un moyeu (12) et une couronne de disque (14), qui sont montés l'un dans l'autre de manière rotative autour d'un axe de rotation, l'ensemble comprenant également au moins deux ressorts de torsion en fil enroulé (15, 16), qui, en étant enroulés autour de l'axe de rotation, sont agencés chacun respectivement entre le moyeu et la couronne de disque, et dont une extrémité respective est en appui, dans le sens de rotation, par rapport au moyeu (12), et dont l'autre extrémité respective est en appui, dans le sens de rotation, par rapport à la couronne de disque (14), et qui possèdent, entre les extrémités, une longueur libre de ressort non soutenue, et sont montés en étant précontraints de manière mutuellement opposée,
**caractérisé**
**en ce que** l'un au moins des ressorts de torsion en fil enroulé (15, 16) s'appuie avec une extrémité, contre une zone d'appui (44) de l'une des parties - moyeu (12) ou couronne de disque (14) - et présente ensuite dans la direction périphérique, une distance d'espacement radiale croissante le long de la périphérie, par rapport à une surface d'appui (45) courbe sur celle considérée des parties - moyeu (12) respectivement couronne de disque (14) -, la distance d'espacement à la surface d'appui, dudit au moins l'un des ressorts de torsion en fil enroulé, étant, lors d'une rotation relative des parties - moyeu (12) et couronne de disque (14) - l'une à l'encontre de l'autre, réduite le long de la périphérie, de manière progressive jusqu'à zéro, en conduisant ainsi à un allongement de la zone d'appui (44) dans la région de la surface d'appui (45) et à un raccourcissement de la longueur libre de ressort.

2. Disque d'entraînement selon la revendication 1,
**caractérisé**
**en ce que** la distance d'espacement radiale d'au moins l'un des ressorts de torsion en fil enroulé (15, 16) à la surface d'appui (45) est, pour un disque d'entraînement (11) non chargé, croissante en continu dans la direction périphérique, à partir de la zone d'appui (44). (Fig.1, 2)

3. Disque d'entraînement selon la revendication 1,
**caractérisé**
**en ce que** la distance d'espacement radiale d'au moins l'un des ressorts de torsion en fil enroulé (15, 16) à la surface d'appui (45) est, pour un disque d'entraînement (11) non chargé, tout d'abord croissante dans la direction périphérique à partir de la zone d'appui (44) et est ensuite constante et/ou diminue à nouveau. (Fig.3, 4)

4. Disque d'entraînement selon la revendication 1 ou la revendication 2,
**caractérisé**
**en ce que** la surface d'appui (45) courbe est une surface cylindrique intérieure de la couronne de disque (14).

5. Disque d'entraînement selon la revendication 1 ou la revendication 2,
**caractérisé**
**en ce que** la surface d'appui (45) courbe est une surface cylindrique extérieure du moyeu (12).

6. Disque d'entraînement selon l'une des revendications 1 ou 3,
**caractérisé**
**en ce que** la surface d'appui (45) courbe est un tronçon de surface cylindrique intérieure à laquelle se raccorde une surface en spirale, qui se rétrécit, dans la couronne de disque (14).

7. Disque d'entraînement selon l'une des revendications 1 ou 3,
**caractérisé**
**en ce que** la surface d'appui (45) courbe est un tronçon de surface cylindrique extérieure, à laquelle se raccorde une surface en spirale, qui s'élargit, sur le moyeu (12).

8. Disque d'entraînement selon l'une des revendications 4 ou 6,
**caractérisé**
**en ce que** lesdits au moins deux ressorts de torsion en fil enroulé (15, 16) sont, dans l'état implanté de précontrainte réciproque, radialement évasés par rapport à leur forme détendue.

9. Disque d'entraînement selon l'une des revendications 5 ou 7,
**caractérisé**
**en ce que** lesdits au moins deux ressorts de torsion en fil enroulé (15, 16) sont, dans l'état implanté de précontrainte mutuelle opposée, radialement resserrés par rapport à leur forme détendue.

10. Disque d'entraînement selon l'une des revendications 1 à 9,
**caractérisé**
**en ce que** lesdits au moins deux ressorts de torsion en fil enroulé (15, 16) présentent des courbes caractéristiques de ressort, qui diffèrent les unes des autres.

11. Disque d'entraînement selon l'une des revendications 1 à 10,
**caractérisé**
**en ce que** lesdits au moins deux ressorts de torsion en fil enroulé (15, 16) se présentent sous un nombre différent par groupe.

12. Disque d'entraînement selon l'une des revendications 1 à 11,
**caractérisé**
**en ce que** ledit au moins un des ressorts de torsion en fil enroulé (15, 16) comprend respectivement des zones d'extrémité présentant des rayons différents mais respectivement constants, et une zone intermédiaire en forme de spirale.

13. Disque d'entraînement selon l'une des revendications 1 à 12,
**caractérisé**
**en ce que** ledit au moins un des ressorts de torsion en fil enroulé (15, 16) est enroulé dans un plan.

14. Disque d'entraînement selon l'une des revendications 1 à 13,
**caractérisé**
**en ce que** le moyeu (12) est constitué de l'assemblage de deux pièces de tôle (21, 22) embouties.

15. Disque d'entraînement selon l'une des revendications 1 à 14,
**caractérisé**
**en ce que** le moyeu (12) est constitué de l'assemblage d'une première pièce (21) en forme de cuvette et d'une deuxième pièce (22) en forme de cuvette annulaire, deux zones cylindriques étant insérées mutuellement l'une dans l'autre selon un ajustement serré (13), et le moyeu forme une rainure annulaire (25) dans laquelle sont logés les ressorts de torsion en fil enroulé (15, 16) et dans laquelle est guidée la couronne de disque (14).

16. Disque d'entraînement selon l'une des revendications 1 à 15,
**caractérisé**
**en ce que** la couronne de disque (14) comprend un disque de guidage (31), qui s'engage dans la rainure annulaire (25) du moyeu (12), et comprend également une couronne à courroie (32), qui forme avec le moyeu (12), deux chambres annulaires (26, 27), qui sont séparées par le disque de guidage (31).
